# EUROPÄISCHE PATENTSCHRIFT

(11) **EP 4 516 437 B1**
(45) Veröffentlichungstag und Bekanntmachung des Hinweises auf die Patenterteilung: **22.10.2025**
(21) Anmeldenummer: 23195186.4
(22) Anmeldetag: 04.09.2023
(51) Int. Cl.: B23F 21/02, B24D 5/14, B24D 18/00, B24D 5/16, B23F 21/00

(54) **WÄLZSCHLEIFWERKZEUG ZUR HARTFEINBEARBEITUNG VON VERZAHNUNGSKOMPONENTEN DURCH KONTINUIERLICHES WÄLZSCHLEIFEN**
ROLLING GRINDING TOOL FOR HARD FINISHING TOOTHED COMPONENTS BY CONTINUOUS ROLLING GRINDING
OUTIL DE RECTIFICATION À ROULEAUX POUR L'USINAGE DUR FIN DE COMPOSANTS DE DENTURE PAR RECTIFICATION À ROULEAUX CONTINUE

(43) Veröffentlichungstag der Anmeldung: 05.03.2025
(73) Patentinhaber: Krebs & Riedel Schleifscheibenfabrik GmbH & Co. KG, 34385 Bad Karlshafen (DE)
(72) Erfinder: Weber, Steffen, 37671 Höxter (DE); Kuhl, Ingo, 37697 Lauenförde (DE)
(74) Vertreter: Ter Meer Steinmeister & Partner

(56) Entgegenhaltungen:
- KR-B1- 102 309 565
- US-A1- 2014 206 269
- US-B1- 6 257 963

## Beschreibung

Die Erfindung betrifft ein Wälzschleifwerkzeug zur Hartfeinbearbeitung von Verzahnungskomponenten durch kontinuierliches Wälzschleifen.

### Hintergrund

Die Hartfeinbearbeitung ist ein Verfahren, das zur Oberflächenbearbeitung von Verzahnungskomponenten, beispielsweise von Zahnrädern bzw. Zahnradkomponenten für Getriebe, eingesetzt wird. Als Hartfeinbearbeitung wird insbesondere ein Bearbeitungsverfahren bezeichnet, mit dem die Beschaffenheit der Oberfläche abschließend definiert wird. Insbesondere wird mit der Hartfeinbearbeitung die finale Verzahnungskontur einer Verzahnungskomponente erzeugt und werden gleichzeitig die geforderten Oberflächenqualitäten eingestellt.

WO 2021/039195 A1 beschreibt ein Mehrschichtschleifwerkzeug zum Zahnradschleifen mit einem Grobschleifteil und einem Endbearbeitungsschleifteil, die gegenseitig fixiert sind und eine gemeinsame Drehachse haben. Die Außenumfangsfläche des Grobschleifteils und die Außenumfangsfläche des Endbearbeitungsschleifteils weisen Gewinderillen auf, die kontinuierlich von der Außenumfangsfläche des Grobschleifteils bis zur Außenumfangsfläche des Endbearbeitungsschleifteils ausgebildet sind. Der Endbearbeitungsschleifteil wird durch Laminieren von Poliertüchern gebildet und ist elastischer als der Grobschleifteil. Der Endbearbeitungsschleifteil und der Grobschleifteil sind an ihren Planflächen beispielsweise durch einen Kleber miteinander verbunden, um ein Mehrschichtschleifwerkzeug zum Zahnradschleifen zu bilden.

WO 2021/039196 A1 beschreibt ein Doppelschichtschleifwerkzeug zum Zahnradschleifen mit einem Grobbearbeitungsabschnitt und einem Endbearbeitungsabschnitt, bei dem lediglich eine Planfläche eines ersten Kerns und eine Planfläche eines zweiten Kerns miteinander in einem Zustand verbunden sind, in dem ein Grobschleifteil und ein Endbearbeitungsschleifteil nicht miteinander verbunden sind. In einem Beispiel sind der Grobschleifteil und der Endbearbeitungsschleifteil jeweils mit einem Kleber auf den jeweiligen Kern geklebt, und die Kerne sind mit einem Kleber an ihren Planflächen miteinander verklebt. In einem anderen Beispiel ist der Grobschleifteil integral mit dem betreffenden Kern ausgebildet. In einem weiteren Beispiel ist der Grobschleifteil integral mit beiden Kernen ausgebildet.

US 2014/0206269 A1 offenbart ein Werkzeug zum Wälzschleifen mit einer Schleifschnecke, wobei eine Vielzahl von Schleifbelägen direkt auf einen Werkzeughalter, insbesondere einen Werkzeugdorn oder eine Aufnahmehülse, aufgeklebt werden. US 2014/0206269 A1 offenbart den Oberbegriff des Anspruchs 1.

KR 102 309 565 B1 offenbart eine Schleifscheibe zur Glasscheibenbearbeitung mit einer Hülse und einer Schleifschicht, die um die Hülse herum gebildet ist. In einem Beispiel besteht die Hülse aus einem Kunstharz aus ABS-Material oder einem Verbundkunstharz mit Polyurethanharz in ABS. Die Schleifschicht enthält ein Schleifmittel und Polyurethan.

US 6 257 963 B1 offenbart ein Schleifwerkzeug, bei dem ein Schleifkörper auf einen Ring aufgeklebt ist.

### Offenbarung der Erfindung

Aufgabe der Erfindung ist es, ein neuartiges Wälzschleifwerkzeug zur Hartfeinbearbeitung von Verzahnungskomponenten durch kontinuierliches Wälzschleifen zu schaffen, das eine hohe Oberflächenqualität bei der Bearbeitung eines Werkstücks und zugleich eine hohe Prozesssicherheit ermöglicht.

Die Aufgabe wird durch ein Wälzschleifwerkzeug gemäß dem Anspruch 1 und durch ein Verfahren zur Herstellung eines Wälzschleifwerkzeugs gemäß dem Anspruch 11 gelöst. Vorteilhafte Ausführungsformen sind in den Unteransprüchen genannt.

Gemäß einem Aspekt der Erfindung wird ein Wälzschleifwerkzeug zur Hartfeinbearbeitung von Verzahnungskomponenten durch kontinuierliches Wälzschleifen geschaffen, umfassend: zwei Wälzschnecken zum Wälzschleifen einer Verzahnungskontur einer Verzahnungskomponente, wobei die Wälzschnecken jeweils im Wesentlichen aus einer Matrix bestehen, in die jeweils zumindest ein Schleifmittel eingebettet ist, wobei die Wälzschnecken jeweils eine axiale Öffnung aufweisen; und eine Hülse, auf der die Wälzschnecken in axialer Richtung der Hülse hintereinander angeordnet sind, wobei die Hülse im Wesentlichen aus einer Polymer-Matrix besteht, die stoffschlüssig mit einer jeweiligen Mantelfläche der Öffnungen der Wälzschnecken verbunden ist, wobei die Wälzschnecken jeweils an ihrer Außenmantelfläche eine schraubenförmig gewundene Profilierung aufweisen und die schraubenförmig gewundenen Profilierungen der zwei Wälzschnecken jeweilige Abschnitte einer gemeinsamen, schraubenförmig gewundenen Profilierung des Wälzschleifwerkzeugs bilden. Die Verzahnungskomponenten (oder Werkstücke) können insbesondere metallische Verzahnungskomponenten sein. Die Verzahnungskomponenten können insbesondere Zahnräder sein oder umfassen.

Durch die Erfindung ist ein Wälzschleifwerkzeug zur Hartfeinbearbeitung von Verzahnungskomponenten durch kontinuierliches Wälzschleifen geschaffen, das zwei Wälzschnecken und eine Hülse umfasst. Die jeweilige Wälzschnecke besteht im Wesentlichen aus einer Matrix, in die zumindest ein Schleifmittel eingebettet ist. Die jeweilige Wälzschnecke kann aus der Matrix und dem zumindest einen Schleifmittel bestehen. Das Schleifmittel kann als Schleifkorn bezeichnet werden. Die Wälzschnecken können insbesondere unterschiedliche Matrizen aufweisen und/oder unterschiedliche Schleifmittel, oder z.B. Schleifmittel unterschiedlicher Korngrößen und/oder Schleifmittel in unterschiedlichen Materialanteilen, jeweils bezogen auf die Zusammensetzung der jeweiligen Wälzschnecken. Die Wälzschnecken weisen jeweils eine axiale Öffnung auf, insbesondere eine durchgehende Öffnung. Die Wälzschnecken sind auf der Hülse in axialer Richtung der Hülse hintereinander angeordnet. Sie können insbesondere aneinander angrenzen. Die Hülse besteht im Wesentlichen aus einer Polymer-Matrix, die stoffschlüssig mit einer jeweiligen Mantelfläche der Öffnungen der Wälzschnecken verbunden ist. Das Wälzschleifwerkzeug weist eine schraubenförmig gewundene Profilierung auf. Die Profilierung ist insbesondere eine gemeinsame, schraubenförmig gewundenen Profilierung (der zwei Wälzschnecken) des Wälzschleifwerkzeugs. Die jeweilige Wälzschnecke weist an ihrer Außenmantelfläche eine schraubenförmig gewundene Profilierung auf, die einen jeweiligen Abschnitt der gemeinsamen, schraubenförmig gewundenen Profilierung (der zwei Wälzschnecken) des Wälzschleifwerkzeugs bildet. Die Profilierung an der Mantelfläche des Wälzschleifwerkzeugs umfasst somit ineinander übergehend beide Werkzeugkomponenten (Wälzschnecken), d.h. erstreckt sich ineinander übergehend über beide Wälzschnecken. Durch die Kombination der Wälzschnecken wird ein notwendiges passgenaues Aufspannen einzelner Wälzschnecken als Einzelkomponenten auf eine Aufnahme einer Schleifmaschine unnötig, da die Wälzschnecken bereits fix zueinander positioniert sind. Ausrichtungsfehler werden somit vermieden.

Die jeweilige Öffnung einer Wälzschnecke kann beispielsweise symmetrisch zu einer jeweiligen Längsachse (Drehachse) der Wälzschnecke ausgebildete sein. Die jeweilige Öffnung der Wälzschnecken kann durchgehend sein. Die jeweilige Öffnung der Wälzschnecken kann im Wesentlichen eine zylindrische Öffnung entlang der jeweiligen Längsachse sein. Mit anderen Worten kann zumindest eine der zwei Wälzschnecken eine im Wesentlichen hohlzylinderförmige Wälzschnecke sein. Die schraubenförmig gewundenen Profilierungen der Wälzschnecken können als Gewindegänge ausgebildet sein. Die schraubenförmig gewundenen Profilierungen können jeweils eine auf der jeweiligen Außenmantelfläche der Wälzschnecken eingeschnittene, fortlaufende Rille sein, die einer Schraubenlinie folgt. Die jeweiligen schraubenförmig gewundenen Profilierungen der Wälzschnecken können im Normalschnitt (Schnitt entlang der Längsachse bzw. Drehachse) Zahnstangenprofilierungen entsprechen. Die Profilierungen der Wälzschnecken können jeweils schraubenförmig gewundene Profilierungen zum Wälzschleifen der Verzahnungskontur der Verzahnungskomponente sein.

Das Wälzschleifwerkzeug umfasst die Hülse. Die Hülse kann sich insbesondere entlang einer Drehachse (Längsachse) des Wälzschleifwerkzeugs erstrecken. Die Hülse kann eine im Wesentlichen zylindrische Hülse sein, insbesondere eine im Wesentlichen hohlzylinderförmige Hülse. Die Hülse kann eingerichtet sein zum Eingreifen einer Werkzeugaufnahme, insbesondere zum Aufnehmen von und Ineingriffbringen mit einem zylindrischen Schaft einer Werkzeugaufnahme. Die Hülse kann eine in Kontakt mit einer Welle einer Werkzeugaufnahme einer Schleifmaschine bringbare Innenmantelfläche aufweisen. Endbereiche der Hülse können einen übereinstimmenden Innenradius aufweisen. Mindestens an den Endbereichen ist die Innenmantelfläche zum Inkontaktbringen mit der Welle einer Werkzeugaufnahme einer Schleifmaschine eingerichtet. Die Hülse besteht im Wesentlichen aus einer Polymer-Matrix. Insbesondere kann die Hülse aus der Polymer-Matrix bestehen. Die Hülse kann insbesondere im Wesentlichen aus einer kontinuierlichen Polymer-Matrix bestehen. Die Hülse hat somit nicht zwei Teile, die jeweils eine Polymer-Matrix aufweisen und etwa durch eine Verklebung verbunden sind. Die Hülse kann insbesondere im Wesentlichen aus einer einstückigen, kontinuierlichen Polymer-Matrix homogener (d.h., räumlich gleichmäßiger) Zusammensetzung bestehen.

Die Wälzschnecken sind insbesondere in axialer Richtung der Hülse mit ihren axialen Öffnungen hintereinander auf der Hülse angeordnet. Mit anderen Worten sind die Wälzschnecken entlang einer gemeinsamen Achse hintereinander auf der Hülse angeordnet. Das Wälzschleifwerkzeug kann somit ein mehrschichtiges Wälzschleifwerkzeug sein, bei dem die Wälzschnecken jeweilige Schichten des Wälzschleifwerkzeugs bilden. Die Hülse ist stoffschlüssig mit einer jeweiligen Mantelfläche der Öffnungen der Wälzschnecken verbunden. Insbesondere ist die Hülse unlösbar (oder unlösbar stoffschlüssig) mit einer jeweiligen Mantelfläche der Öffnungen der Wälzschnecken verbunden. Die Wälzschnecken können aneinander angrenzend angeordnet sein. Die Wälzschnecken können beabstandet voneinander angeordnet sein. Insbesondere kann ein Spalt zwischen den Wälzschnecken gebildet sein. Insbesondere kann mindestens eine der Wälzschnecken eine plane Planfläche des Wälzschleifwerkzeugs bilden, d.h. eine im Wesentlichen ringscheibenförmige Endfläche des Wälzschleifwerkzeugs.

Die Wälzschnecken können insbesondere auf der Hülse so zueinander ausgerichtet sein, dass die schraubenförmig gewundenen Profilierungen der Wälzschnecken ineinander übergehen, insbesondere fortlaufend oder einander fortsetzend ineinander übergehen. Die schraubenförmig gewundenen Profilierungen der Wälzschnecken bilden jeweilige Abschnitte einer gemeinsamen, schraubenförmig gewundenen Profilierung des Wälzschleifwerkzeugs. Mit anderen Worten können die schraubenförmig gewundenen Profilierungen der Wälzschnecken eine einheitliche Profilierung des Wälzschleifwerkzeugs bilden. Die gemeinsame Profilierung kann insbesondere am Übergang zwischen den Wälzschnecken kontinuierlich sein oder eine Lücke aufweisen. Die schraubenförmig gewundenen Profilierungen der Wälzschnecken weisen insbesondere übereinstimmende Steigungen (Gewindesteigungen) und/oder Steigungswinkel auf. Die schraubenförmig gewundenen Profilierungen der Wälzschnecken können übereinstimmende Flankenformen und/oder Flankenwinkel aufweisen. Die Wälzschnecken können im Wesentlichen übereinstimmende Außenradien aufweisen.

Das Wälzschleifwerkzeug zeichnet sich dadurch aus, dass die Wälzschnecken in axialer Richtung der Hülse hintereinander auf der Hülse angeordnet sind, und dass die Hülse im Wesentlichen aus einer Polymer-Matrix besteht, die stoffschlüssig mit einer jeweiligen Mantelfläche der Öffnungen der Wälzschnecken verbunden ist. Durch die stoffschlüssige Verbindung und die im Wesentlichen aus einer Polymer-Matrix bestehenden Hülse ergibt sich eine hohe strukturelle Stabilität des Wälzschleifwerkzeugs, wobei durch die genannte Struktur der Hülse mehrteilige Kerne vermieden werden können. Die Hülse kann beispielsweise eine Verdrehsicherung für die Wälzschnecken bilden. Insbesondere wirkt die Hülse als Verdrehsicherung, indem sie die gegenseitige Position und Ausrichtung der Wälzschnecken fixiert und so ein Verdrehen der Wälzschnecken gegeneinander verhindert. Außerdem wird auch die Herstellung vereinfacht, da zwei einzelne Wälzschnecken auf der im Wesentlichen aus einer Polymer-Matrix bestehenden Hülse angeordnet sind. Insbesondere kann ein Herstellen der Hülse durch Gießen der Hülse in den axialen Öffnungen der zueinander ausgerichteten Wälzschnecken ermöglicht werden. Die Hülse kann beispielsweise in Form eines Ausgusses, insbesondere eines Polymer-Ausgusses wie z.B. eines Polyurethan-Ausgusses (PUR-Ausguss), innerhalb der Wälzschnecken gebildet sein. Der Ausguss kann aus einem Polymer, insbesondere aus Polyurethan, bestehen.

Der Aufbau des Wälzschleifwerkzeugs ermöglicht es, dass durch Kombination von zwei unterschiedlich aufgebauten Wälzschnecken, die jeweils im Wesentlichen aus einer Matrix bestehen, in die jeweils zumindest ein Schleifmittel eingebettet ist, beispielsweise ein Schruppbereich und ein Polierbereich in einem mehrschichtigen Wälzschleifwerkzeug kombiniert werden können.

Besonders vorteilhaft ist, dass durch die genannte Struktur der Hülse eine flächige Verklebung der Endseiten (d.h. der Planflächen) der Wälzschnecken miteinander vermieden werden kann, wobei dennoch eine positions- und verdrehsichere und feste, definierte Verbindung der Wälzschnecken miteinander über die Hülse erreicht wird. Dies hat den Vorteil, dass bei Rotation des Wälzschleifwerkzeugs um die Längsachse des Wälzschleifwerkzeugs eine z.B. durch eine Zentrifugalkraft bedingte unterschiedliche radiale Ausdehnung der einzelnen Wälzschnecken ermöglicht werden kann. Dadurch kann eine Spannungsüberlast vermieden und somit die Prozesssicherheit wesentlich erhöht werden, und insbesondere können Schäden am Wälzschleifwerkzeug und/oder am Werkstück vermieden werden. Insbesondere können Schäden durch Materialspannungen vermieden werden, wenn die einzelnen Wälzschnecken jeweils unterschiedliche Elastizitätsmodule aufweisen. Im Gegensatz dazu wird bei einem Aufbau mit an den Planflächen verklebten Wälzschnecken bei Wälzschnecken mit unterschiedlichen Materialeigenschaften im Einsatz eine ausdehnungsbedingte radiale Relativbewegung der Werkzeugkomponenten einseitig gehemmt. Dies kann zu einer Spannungsüberlast und zu einer eventuellen Werkzeugschädigung bzw. Werkzeugzerstörung führen.

Beispielsweise kann für einen Schruppbereich des Wälzschleifwerkzeugs eine Wälzschnecke mit keramisch gebundenen Korund- bzw. Sinterkorund bereitgestellt werden, um einen hohen Materialabtrag zu erzielen. Um eine hohe Oberflächenqualität mit einem hohen Traganteil der geschliffenen Oberflächen zu erzielen, der beispielsweise essenziell für die Laufruhe und Effizienz von Getrieben ist, kann für einen Polierbereich eine Wälzschnecke mit einer elastischen Polymer-Matrix bereitgestellt werden. Wenn beispielsweise herkömmlich zur Kombination von Schrupp- und Feinschleif- bzw. Polierbereichen ein gegenseitiges Verkleben der Einzelkomponenten erfolgt, bei dem die Wälzschnecken des Schrupp- bzw. des Polierbereichs an deren aneinander angrenzenden endseitigen Planflächen miteinander verklebt werden, dann werden gewöhnlich aus einem elastischen Polierbereich und einem Schruppbereich mit einem kleineren Elastizitätsmodul kombinierte Wälzschleifwerkzeuge bei einer reduzierten und dem elastischen Polierbereich angepassten Drehzahl betrieben. Das Reduzieren der Drehzahl eines kombinierten Wälzschleifwerkzeugs mit einem verklebten Schrupp- und Polierbereich kann zwar die radiale Ausdehnung mindern, jedoch erhöht sich die Bearbeitungszeit für das Werkstück erheblich. Wenn im Gegensatz dazu bei dem Wälzschleifwerkzeug gemäß der Offenbarung die Hülse im Wesentlichen aus einer Polymer-Matrix besteht, die stoffschlüssig mit einer jeweiligen Mantelfläche der Öffnungen der Wälzschnecken verbunden ist, können mechanische Spannungen und dadurch verursachte Schäden an dem Wälzschleifwerkzeug und/oder dem Werkstück vermieden werden. Da auch bei höheren Drehzahlen keine Spannungsüberlast im Wälzschleifwerkzeug erzeugt wird, kann die Prozesssicherheit durch die Hülse stark erhöht werden. Zudem werden die Werkzeugaufnahmen der Schleifmaschinen, insbesondere deren Wellen bzw. Achsen, geschont, da die Hülse im Wesentlichen aus einer Polymer-Matrix besteht und somit kein abrasives Material in direktem Kontakt mit der Werkzeugaufnahme bzw. den Aufnahmestellen steht.

In Ausführungsformen schließt die Hülse unmittelbar an die jeweilige Mantelfläche der Öffnungen der Wälzschnecken an. Insbesondere kann die Hülse unmittelbar an die Wälzschnecken angeformt mit den Wälzschnecken verbunden sein. Die Wälzschnecken können beispielsweise durch Vergießen der Hülse mit der Hülse verbunden werden. Mit anderen Worten kann die Hülse in den Öffnungen der Wälzschnecken gegossen sein, um sich mit den Wälzschnecken zu verbinden. Alternativ kann die jeweilige Mantelfläche der Öffnungen der Wälzschnecken beispielsweise an einer Außenmantelfläche der Hülse mit der Hülse verklebt sein.

In Ausführungsformen ist die Polymer-Matrix der Hülse eine Epoxidharz-Matrix oder eine Polyurethan-Matrix. In Ausführungsformen ist die jeweilige Matrix wenigstens einer der Wälzschnecken eine Polymer-Matrix oder insbesondere eine Polyurethan-Matrix. Die Polymer-Matrix, insbesondere die Polymer-Matrix einer Wälzschnecke, kann beispielsweise durch Beimischen von Additiven individuell, insbesondere in Bezug auf Porosität, Elastizität und Dichte, auf die Anforderungen in Bezug auf ein zu verarbeitendes Werkstück (Verzahnungskomponente) angepasst werden. Die jeweilige Polymer-Matrix einer Wälzschnecke kann neben dem zumindest einen Schleifmittel - abhängig von den Einsatzbedingungen - auch mit wenigstens einem weiteren Additiv versetzt sein. Die Polymer-Matrix der Hülse kann mit wenigstens einem Additiv versetzt sein. Additive können aus typischen Polymer-Additiven bestehen (z.B. Verarbeitungs- und Temperaturstabilisatoren) und können auch verstärkende Faserwerkstoffe enthalten. Die jeweilige Polyurethan-Matrix kann zumindest einen Faserwerkstoff enthalten. Der zumindest eine Faserwerkstoff kann zumindest eines von Glasfasern, Kohlenstofffasern, Keramikfasern, Metallfasern, Polymerfasern (z.B. Aramide) und/oder Naturfasern (z.B. Cellulose) umfassen. Die jeweilige Polymer-Matrix kann eingefärbt sein, z.B. mittels kommerzieller Farbpasten. D.h., die jeweilige Polymer-Matrix kann wenigstens ein Farb-Additiv oder färbendes Additiv umfassen. In Ausführungsformen ist eine Polyurethan-Matrix der Hülse und/oder eine Polyurethan-Matrix wenigstens einer der Wälzschnecken jeweils erhalten aus einer Polyurethanzusammensetzung, die wenigstens eine Polyol-Komponente und wenigstens eine Isocyanat-Komponente und zumindest ein Additiv umfasst. Die jeweilige Polyurethan-Matrix bzw. die Polyurethanzusammensetzung kann somit gängige Polyurethansysteme umfassen, bestehend aus wenigstens einer Polyol-Komponente und wenigstens einer Isocyanat-Komponente. Das zumindest eine Additiv kann beispielsweise wenigstens einen Füllstoff umfassen, insbesondere einen oder mehrere gängige Füllstoffe für Polyurethansysteme wie z.B. Calciumsilikate, Aluminosilikate, Aluminiumoxide, Aluminiumhydroxide oder andere keramische Oxide oder Kombinationen von wenigstens zweien davon.

In Ausführungsformen ist die jeweilige Matrix wenigstens einer der Wälzschnecken eine Keramik-Matrix oder eine Polymer-Matrix. Durch die Hülse als Verdrehsicherung können mehrschichtige Kombischleifwerkzeuge (bestehend aus Keramik-Keramik, Keramik-Polymer, Polymer-Polymer oder anderen Kombinationen) gezielt miteinander verbunden werden. Eine zusätzliche Verklebung über die Planfläche der Wälzschnecke ist dadurch nicht notwendig. Das Wälzschleifwerkzeug kann zwei Wälzschnecken jeweils mit einer jeweiligen Polymer-Matrix umfassen. Das Wälzschleifwerkzeug kann zwei Wälzschnecken jeweils mit einer jeweiligen Keramik-Matrix umfassen. Das Wälzschleifwerkzeug kann eine Wälzschnecke mit einer Polymer-Matrix und eine Wälzschnecke mit einer Keramik-Matrix umfassen. Eine Polymer-Matrix kann insbesondere eine höhere Elastizität aufweisen als eine Keramik-Matrix. Eine Kombination einer Wälzschnecke mit einer Polymer-Matrix und einer Wälzschnecke mit einer Keramik-Matrix ist besonders vorteilhaft zur Bildung eines Schruppbereichs und eines Feinschleif- bzw. Polierbereichs, der eine Matrix mit höherer Elastizität erfordert als der Schruppbereich.

In Ausführungsformen unterscheidet sich eine im Wesentlichen aus der jeweiligen Matrix und dem jeweiligen in die Matrix eingebetteten zumindest einen Schleifmittel bestehende Zusammensetzung einer der zwei Wälzschnecken von einer im Wesentlichen aus der jeweiligen Matrix und dem jeweiligen in die Matrix eingebetteten zumindest einen Schleifmittel bestehenden Zusammensetzung der anderen der zwei Wälzschnecken. Die zwei Wälzschnecken können beispielsweise unterschiedliche Matrizen aufweisen und/oder das zumindest eine Schleifmittel einer der Wälzschnecken kann sich von dem zumindest einen Schleifmittel der anderen der Wälzschnecken unterscheiden. Die zwei Wälzschnecken können sich beispielsweise in der Menge des in die jeweilige Matrix eingebetteten jeweiligen Schleifmittels unterscheiden (bezogen auf die Masse oder das Volumen der Zusammensetzung), insbesondere in der Masse oder dem Volumen des jeweiligen Schleifmittels, bezogen auf das Volumen der Wälzschnecke bzw. der Zusammensetzung. Eine der zwei Wälzschnecken kann beispielsweise ein in die Matrix eingebettetes Schleifmittel aufweisen, das sich von dem zumindest einen (bzw. von jedem) in die Matrix der anderen der zwei Wälzschnecken eingebetteten Schleifmittel unterscheidet. Durch unterschiedliche jeweilige Zusammensetzungen der Wälzschnecken können Bereiche oder Schichten des Wälzschleifwerkzeugs mit unterschiedlichen Eigenschaften, insbesondere Materialabtragseigenschaften, realisiert werden.

In Ausführungsformen weist eine der zwei Wälzschnecken eine Elastizität auf, die sich von einer Elastizität der anderen der zwei Wälzschnecken unterscheidet. Insbesondere kann die Matrix der einen von den zwei Wälzschnecken eine Elastizität aufweisen, die sich von einer Elastizität der Matrix der anderen der zwei Wälzschnecken unterscheidet. Durch unterschiedliche jeweilige Elastizitäten der Wälzschnecken können Bereiche oder Schichten des Wälzschleifwerkzeugs mit unterschiedlichen Eigenschaften, insbesondere Materialabtragseigenschaften, realisiert werden.

In Ausführungsformen weist die Außenmantelfläche einer der zwei Wälzschnecken Materialabtragseigenschaften auf, die sich von Materialabtragseigenschaften der Außenmantelfläche der anderen der zwei Wälzschnecken unterscheiden. Die Materialabtragseigenschaften können als Schleifeigenschaften bezeichnet werden. Die Bereiche können dann beispielsweise beim Wälzschleifen unterschiedliche Materialabtragsraten bei ansonsten gleichen Betriebsparametern aufweisen. Beispielsweise kann ein Schruppbereich des Wälzschleifwerkzeugs mit einem Feinschleif- bzw. Polierbereich des Wälzschleifwerkzeugs kombiniert werden.

In Ausführungsformen bildet die Außenmantelfläche einer der zwei Wälzschnecken einen Schruppbereich des Wälzschleifwerkzeugs, und die Außenmantelfläche der anderen der zwei Wälzschnecken bildet einen Feinschliffbereich oder Polierbereich des Wälzschleifwerkzeugs.

Dies ermöglicht ein Grobschleifen und ein Endbearbeiten eines Werkstücks (Verzahnungskomponente) mit dem Wälzschleifwerkzeug. Mit einem derartigen Wälzschleifwerkzeug, einem Kombi-Schleifwerkzeug, kann beispielsweise innerhalb eines Bearbeitungsprozesses mit dem Schruppbereich ein gewisser Materialabtrag realisiert und mit dem anschließenden Feinschleif- bzw. Polierbereich eine gewünschte (hohe) Oberflächenqualität erzeugt werden, z.B. durch Einebnen von Rauheitsspitzen und/oder Einbringen von Druckeigenspannungen. Ein Umrüsten der Werkzeugmaschine für getrennte Bearbeitungsschritte des Schruppens und des Feinschleifens oder Polierens kann damit vermieden werden. Der Schruppbereich kann auch als Schruppzone bezeichnet werden, und der Feinschliffbereich oder Polierbereich kann auch als Feinschliffzone oder Polierzone bezeichnet werden. Der Schruppbereich kann insbesondere geeignet sein, Aufmaße der Verzahnungskomponente nach dem Härten abzutragen sowie Verzüge zu kompensieren. So können niedrige Bauteilrauheiten erzielbar sein. Der Feinschliffbereich oder Polierbereich kann insbesondere geeignet sein, einen hohen Traganteil der geschliffenen Oberfläche der Verzahnungskomponente zu erreichen, welcher essentiell für die Laufruhe und Effizienz eines Getriebes ist. Etwaige mikroskopische Schleifriefen, die beispielsweise aufgrund der Prozesskinematik beim Wälzschleifen mit dem Schruppbereich entstehen können, können durch den Feinschliffbereich oder Polierbereich beseitigt werden. Die den Feinschliffbereich oder Polierbereich umfassende Wälzschnecke kann insbesondere eine elastische Matrix aufweisen. Mit anderen Worten, es handelt sich um einen elastisch gebundenen Feinschliff- bzw. Polierbereich. Die elastische Matrix kann insbesondere eine Polymer-Matrix sein. Die elastische Matrix weist insbesondere eine höhere Elastizität auf als die Matrix der den Schruppbereich umfassenden Wälzschnecke.

In Ausführungsformen umfasst oder ist das zumindest eine Schleifmittel wenigstens einer der Wälzschnecken ein Schleifmittel in Form von Korund (z.B. Sinterkorund), Zirkonkorund, Siliziumkarbid, kubischen Bornitrid oder Diamant oder einer Kombination von wenigstens zwei der genannten.

In Ausführungsformen gestattet die Anordnung der Wälzschnecken eine bei Rotation des Wälzschleifwerkzeugs durch unterschiedliche radiale Dehnung der Wälzschnecken bedingte radiale Relativbewegung zwischen einander zugewandten Planflächen (den jeweiligen endseitigen, im Wesentlichen ringscheibenförmigen Oberflächen) der Wälzschnecken. Die Prozesssicherheit wird dadurch, und durch den Einsatz der Hülse als Verdrehsicherung, stark erhöht. Zumindest an betreffenden, radial äußeren Bereichen der einander zugewandten Endseiten können die Endseiten beispielsweise frei einander gegenüberliegen, also insbesondere ohne Klebstoff dazwischen. Die radiale Ausdehnung der Einzelkomponenten (Wälzschnecken) wird somit nicht zusätzlich gehemmt, und es wird somit keine Überlast im Werkzeugsystem erzeugt. Insbesondere können die einander zugewandten Endseiten der Wälzschnecken zumindest in einem äußeren Radialbereich unverbunden sein, also insbesondere nicht stoffschlüssig miteinander verbunden sein. Dieser äußere Radialbereich (oder radial äußerer Bereich) kann beispielsweise den überwiegenden Teil der radialen Erstreckung der Wälzschnecken radial außerhalb der Öffnung umfassen. Beispielsweise können die Endseiten an diesen Bereichen frei aneinander anliegen oder einen Spalt bilden. Die unterschiedliche radiale Dehnung der Wälzschnecken kann insbesondere eine aufgrund unterschiedlicher Elastizität der Wälzschnecken (bzw. der Matrizen der Wälzschnecken) bedingte unterschiedliche radiale Dehnung der Wälzschnecken sein. Insbesondere kann eine ausdehnungsbedingte radiale Relativbewegung der Wälzschnecken bei Rotation der Wälzschnecken um eine der axialen Richtung der Hülse entsprechende Rotationsachse ungehemmt sein. Beispielsweise können sich durch das Verbinden der jeweiligen Mantelflächen der Öffnungen der Wälzschnecken mit der Außenmantelfläche der Hülse die Wälzschnecken bei Rotation gegenseitig ungehemmt voneinander radial ausdehnen. In Ausführungsformen sind die zwei Wälzschnecken ausschließlich über die axialen Mantelflächen der Öffnungen der Wälzschnecken miteinander verbunden. In Ausführungsformen sind die zwei Wälzschnecken ausschließlich über die axialen Mantelflächen der Öffnungen der Wälzschnecken und gegebenenfalls über einen inneren Radialbereich zwischen einander zugewandten Endseiten der Wälzschnecken miteinander verbunden. Die einander zugewandten Endseiten der Wälzschnecken sind dabei zumindest in einem äußeren Radialbereich unverbunden.

Erfindungsgemäß weist die Matrix zumindest einer der Wälzschnecken eine Porosität auf, und die Polymer-Matrix der Hülse ist in offene Poren der Matrix der betreffenden Wälzschnecke eingedrungen. Mit anderen Worten, die Polymer-Matrix der Hülse ist in offenen Poren der Matrix der betreffenden Wälzschnecke aufgenommen. Insbesondere kann die Hülse durch Eindringen der Polymer-Matrix der Hülse in eine jeweilige offene Porosität der Wälzschnecken mit den Wälzschnecken verbunden sein. Mit anderen Worten können die Wälzschnecken eine jeweilige Porosität aufweisen. Die Polymer-Matrix der Hülse kann beispielsweise beim Vergießen in die Wälzschnecken in die jeweilige Porosität der Wälzschnecken eindringen. Durch die Polymer-Matrix der Hülse in Poren der Wälzschnecke ergibt sich eine besonders innige Verbindung.

In Ausführungsformen liegt die Wanddicke der Hülse in einem Bereich von 1 bis 50 mm, vorzugsweise in einem Bereich von 3 bis 10 mm. Insbesondere kann ein die Hülse bildender Polyurethan-Ausguss eine Stärke von 1 bis 50 mm haben, vorzugsweise eine Stärke von 3 bis 10 mm.

In Ausführungsformen umfasst die Hülse eine Nut, die von den Endseiten der Hülse beabstandet an einer Innenmantelfläche der Hülse ausgebildet ist. Die Nut ist insbesondere ringförmig. Die Nut verläuft insbesondere in ihrer Längsrichtung kreisförmig um die Achse der Hülse herum. Mit anderen Worten kann innerhalb der Hülse ein zylinderförmiger Bereich symmetrisch zur axialen Richtung der Hülse ausgeschnitten sein. Der Radius des ausgeschnittenen, zylinderförmigen Bereichs kann größer als der minimale Innenradius der Hülse und kleiner als der maximale Außenradius der Hülse sein. Der zylinderförmige Bereich kann aus der Hülse beabstandet von den Endseiten der Hülse ausgeschnitten sein. Durch die in die (im wesentlichen hohlzylinderförmige) Hülse eingebrachte Nut kann eine vorteilhafte Materialeinsparung erreicht werden, und die Aufnahme des Wälzschleifwerkzeug auf einer Welle einer Schleifmaschine kann erleichtert werden. Die Nut kann sich zudem vorteilhaft auf die Laufeigenschaften des Wälzschleifwerkzeug auswirken. Ferner kann die Nut die Aufnahme wenigstens eines Gewichts zum Auswuchten des Wälzschleifwerkzeugs gestatten. Die Hülse kann die in Kontakt mit einer Welle einer Werkzeugaufnahme einer Schleifmaschine bringbare Innenmantelfläche aufweisen, die zwei Kontaktbereiche umfasst, welche durch die Nut getrennt sind. Endbereiche der Hülse, zwischen denen die Nut ausgebildet ist, können einen übereinstimmenden Innenradius aufweisen. An den Endbereichen ist die Innenmantelfläche in Kontakt mit einer Welle einer Werkzeugaufnahme einer Schleifmaschine bringbar. Die Endbereiche können somit die Kontaktbereiche sein.

Gemäß einem weiteren Aspekt der Erfindung wird ein Verfahren zur Herstellung eines Wälzschleifwerkzeugs der hierin beschriebenen Art, geschaffen, wobei das Verfahren umfasst: Anordnen zweier Wälzschnecken mit einander zugewandten Planflächen der Wälzschnecken und mit übereinstimmenden Drehachsen der Wälzschnecken, wobei die Wälzschnecken jeweils Wälzschnecken zum Wälzschleifen einer Verzahnungskontur einer Verzahnungskomponente sind und jeweils an ihrer Außenmantelfläche eine schraubenförmig gewundene Profilierung aufweisen, wobei die schraubenförmig gewundenen Profilierungen der zwei Wälzschnecken jeweilige Abschnitte einer gemeinsamen, schraubenförmig gewundenen Profilierung bilden, wobei die Wälzschnecken jeweils im Wesentlichen aus einer Matrix bestehen, in die jeweils zumindest ein Schleifmittel eingebettet ist, wobei die Wälzschnecken jeweils eine axiale Öffnung aufweisen; und Gießen einer Hülse in den axialen Öffnungen der Wälzschnecken und Aushärtenlassen der Hülse, wobei die Hülse im Wesentlichen aus einer Polymer-Matrix besteht, die stoffschlüssig mit einer jeweiligen Mantelfläche der Öffnungen der Wälzschnecken verbunden ist. Das Verfahren kann umfassen: Ausrichten der zwei Wälzschnecken zueinander. Die Wälzschnecken können insbesondere mit übereinstimmenden vertikalen Drehachsen der Wälzschnecken angeordnet werden. In dem Schritt des Gießens der Hülse kann ein Dorn in der Hülse angeordnet sein, um eine innere Öffnung (insbesondere eine Durchgangsöffnung) der Hülse zu formen.

In Ausführungsformen werden in dem Schritt des Anordnens die Wälzschnecken unmittelbar aneinandergrenzend und/oder mit einem Spalt zwischen ihren einander zugewandten Planflächen angeordnet.

### Kurzbeschreibung der Zeichnungen

Ausführungsbeispiele der Erfindung werden im Folgenden anfand der Zeichnungen näher erläutert. Es zeigen:
- Fig. 1a: eine schematische Schnittdarstellung eines Wälzschleifwerkzeugs gemäß einer Ausführungsform in einer Frontalansicht eines Normalschnitts;
- Fig. 1b: eine schematische Darstellung des Wälzschleifwerkzeug nach Fig. 1a in einer Seitenansicht;
- Fig. 2: eine schematische Schnittdarstellung eines Wälzschleifwerkzeugs gemäß einer Ausführungsform in einer Frontalansicht eines Normalschnitts; und
- Fig. 3a und 3b: eine schematische Darstellung eines Verfahrens zur Herstellung eines Wälzschleifwerkzeugs.

### Detaillierte Beschreibung von Ausführungsbeispielen

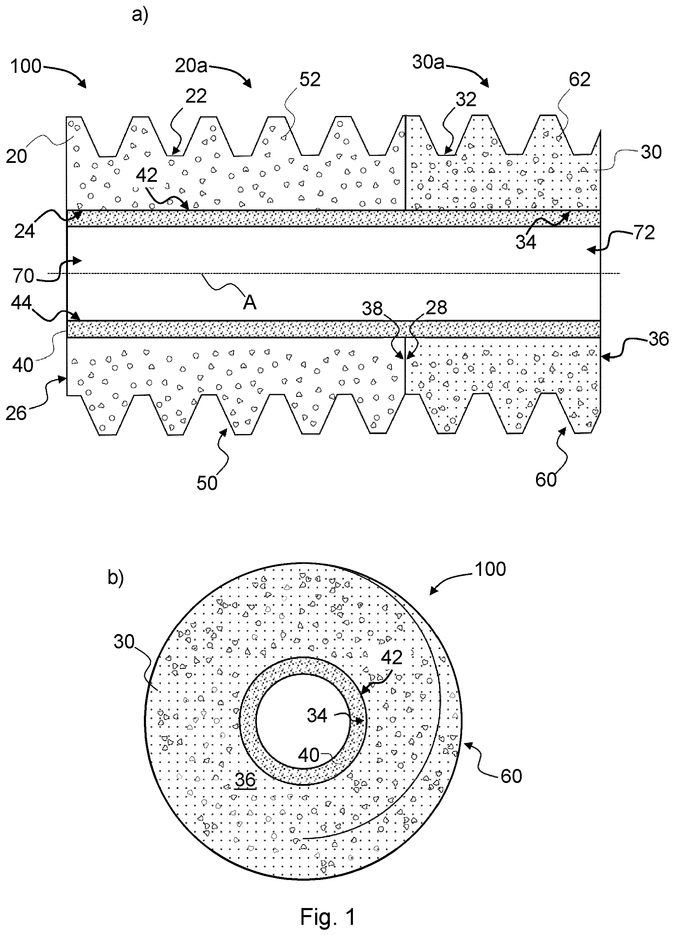

Das in Fig. 1a dargestellte Wälzschleifwerkzeug 100 zur Hartfeinbearbeitung von Verzahnungskomponenten von Werkstücken durch kontinuierliches Wälzschleifen besteht aus einer im Wesentlichen zylinderförmigen Hülse 40 und zwei im Wesentlichen zylinderförmigen Wälzschnecken 20, 30. Fig. 1b zeigt das Wälzschleifwerkzeug 100 in einer Seitenansicht auf eine Endseite 36.

Die Hülse 40 erstreckt sich entlang einer zentralen Längsachse oder Drehachse A des Wälzschleifwerkzeugs 100 und besteht im Wesentlichen aus einer Polyurethan-Matrix. Die Wanddicke der Hülse 40 liegt in einem Bereich zwischen 3 bis 10 mm. Eine Innenmantelfläche 44 der Hülse 40 ist zylindrisch. Die Wälzschnecken 20, 30 haben jeweils eine durchgehende axiale Öffnung 70 bzw. 72. Die jeweilige Öffnung 70, 72 der Wälzschnecken 20, 30 ist zylinderförmig ausgebildet.

Die Wälzschnecke 20 bildet einen Schruppbereich 20a des Wälzschleifwerkzeug 100. Die Wälzschnecke 20 ist aus einer Keramik-Matrix gebildet, in die ein Schleifmittel 52 eingebettet ist. Die Wälzschnecke 30 bildet einen Feinschleif- bzw. Polierbereich 30a des Wälzschleifwerkzeug 100. Die Wälzschnecke 30 ist aus einer Polymer-Matrix gebildet, in die ein Schleifmittel 62 eingebettet ist. Die jeweiligen Schleifmittel 52, 62 bestehen aus Korund, Zirkonkorund, Siliziumkarbid, kubischem Bornitrid oder Diamant oder einer Kombination von wenigstens zwei der genannten. An der äußeren Mantelfläche 22 der Wälzschnecke 20 ist eine schraubenförmig gewundene Profilierung 50 ausgebildet. Ebenso ist an der äußeren Mantelfläche 32 der Wälzschnecke 30 eine schraubenförmig gewundene Profilierung 60 ausgebildet. Die Profilierungen 50, 60 entsprechen im Normalschnitt einer Zahnstangenprofilierung. Die Profilierungen 50, 60 sind jeweils als Gewindegänge ausgebildet. Die Wälzschnecken 20, 30 sind in axialer Richtung A der Hülse 40 mit ihren axialen Öffnungen 70, 72 hintereinander auf der Hülse 40 angeordnet. Die Wälzschnecken 20, 30 sind, ohne stoffschlüssig mit ihren aneinander angrenzenden Planflächen 28, 38 verbunden zu sein, fest auf der Hülse 40 angeordnet. Eine ausdehnungsbedingte radiale Relativbewegung der Wälzschnecken 20, 30 bei Rotation der Wälzschnecken 20, 30, um eine der axialen Richtung A der Hülse 40 entsprechenden Rotationsachse ist somit ungehemmt.

Eine innere Mantelfläche 24 der axialen Öffnung 70 der Wälzschnecke 20 ist mit einer äußeren Mantelfläche 42 der Hülse 40 stoffschlüssig unlösbar verbunden. Eine innere Mantelfläche 34 der axialen Öffnung 72 der Wälzschnecke 30 ist mit der äußeren Mantelfläche 42 der Hülse 40 ebenfalls stoffschlüssig unlösbar verbunden. Die Wälzschnecken 20, 30 sind unmittelbar, insbesondere durch Vergießen der Hülse 40, an die Hülse 40 angeformt mit der Hülse 40 verbunden. Die Wälzschnecken 20, 30 können gegebenenfalls außerdem durch Eindringen der Polymer-Matrix der Hülse 40 in eine etwaige jeweilige offene Porosität der Wälzschnecken 20, 30 mit der Hülse 40 verbunden sein. Die Wälzschnecken 20, 30 sind derart angeordnet, dass eine Planfläche 28 der Wälzschnecke 20 an eine Planfläche 38 der Wälzschnecke 30 angrenzt.

Die schraubenförmig gewundenen Profilierungen 50, 60 der Wälzschnecken 20, 30 bilden eine einheitliche Profilierung des Wälzschleifwerkzeugs 100. Die jeweiligen gewindeförmigen Profilierungen 50, 60 der Wälzschnecken 20, 30 weisen übereinstimmende Steigungen und Steigungswinkel auf. Die jeweiligen gewindeförmigen Profilierungen 50, 60 der Wälzschnecken 20, 30 weisen übereinstimmende Flankenformen und Flankenwinkel auf. Die Wälzschnecken 20, 30 sind derart angeordnet, dass die schraubenförmig gewundene Profilierung 50 des Schruppbereichs 20a und die schraubenförmig gewundene Profilierung 60 des Feinschleifbereichs 30a an den jeweilig aneinander angrenzend angeordneten Planflächen 28, 38 der Wälzschnecken 20, 30 kontinuierlich ineinander übergehen.

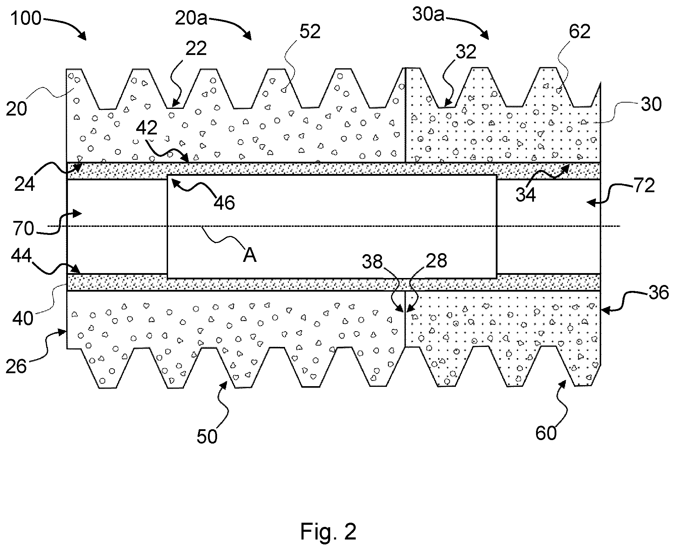

Fig. 2 zeigt ein Wälzschleifwerkzeug 100 gemäß einem Ausführungsbeispiel, das sich vom Beispiel der Fig. 1 durch eine ringförmige Nut 46 in der Innenmantelfläche 44 der Hülse 40 unterscheidet. Die Nut 46 ist symmetrisch zur axialen Richtung A der Hülse 40 ausgebildet. Die Nut 46 ist von den Endseiten der Hülse 40 beabstandet an der Innenmantelfläche 44 der Hülse 40 ausgebildet. Die Nut 46 ist von den äußeren Endseiten 26, 36 der Wälzschnecken 20, 30 beabstandet und erstreckt sich über den überwiegenden Teil der Länge der Hülse 40.

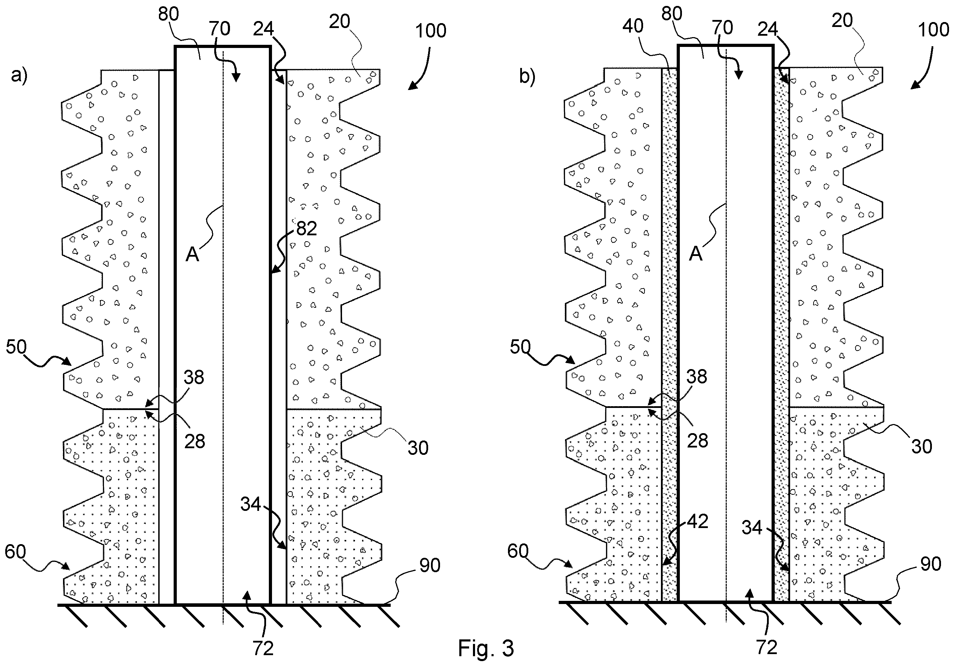

Fig. 3 zeigt schematisch ein Verfahren zur Herstellung eines Wälzschleifwerkzeugs 100 gemäß dem Beispiel der Figur 1 oder 2. Die Wälzschnecken 20, 30 werden in axialer Richtung A eines Dorns 80 mit ihren zylinderförmigen axialen Öffnungen 70, 72 hintereinander um den Dorn 80 auf einer Grundplatte 90 angeordnet. Der Dorn 80 ist zylinderförmig ausgebildet. Die Wälzschnecken 20, 30 sind radial zentriert um den Dorn 80 angeordnet. Die Wälzschnecken 20, 30 sind, ohne stoffschlüssig mit ihren aneinander angrenzenden Planflächen 28, 38 verbunden zu sein, um den Dorn 80 angeordnet. Die Wälzschnecken 20, 30 sind derart um den Dorn 80 angeordnet, dass die schraubenförmig gewundene Profilierung 50 der Wälzschnecke 20 und die schraubenförmig gewundene Profilierung 60 der Wälzschnecke 30 an den jeweilig aneinander angrenzend angeordneten Planflächen 28, 38 der Wälzschnecken 20, 30 kontinuierlich ineinander übergehen. Der in Fig. 3a gezeigte, von den inneren Mantelflächen 24, 34 der Wälzschnecken 20, 30 und einer äußeren Mantelfläche 82 des Dorns 80 umschlossener Hohlraum wird dann, wie in Fig. 3b gezeigt, mit einer Polymerzusammensetzung ausgegossen, um die Hülse 40 in Form einer Polymer-Matrix zu bilden. Die im Hohlraum eingegossene Polymer-Matrix bildet in einem ausgehärteten Zustand die Hülse 40, die dann mit den inneren Mantelflächen 24, 34 der Wälzschnecken 20, 30 stoffschlüssig verbunden ist. Nach Entformen kann gegebenenfalls die Nut 46 beispielsweise durch Drehen (Freidrehen) hergestellt werden.

## Patentansprüche

1. Wälzschleifwerkzeug (100) zur Hartfeinbearbeitung von Verzahnungskomponenten durch kontinuierliches Wälzschleifen, umfassend:
zwei Wälzschnecken (20; 30) zum Wälzschleifen einer Verzahnungskontur einer Verzahnungskomponente, wobei die Wälzschnecken jeweils eine axiale Öffnung (70; 72) aufweisen; und
eine Hülse (40), auf der die Wälzschnecken (20; 30) in axialer Richtung (A) der Hülse (40) hintereinander angeordnet sind, wobei die Hülse stoffschlüssig mit einer jeweiligen Mantelfläche (24; 34) der Öffnungen (70; 72) der Wälzschnecken (20; 30) verbunden ist,
wobei die Wälzschnecken (20; 30) jeweils an ihrer Außenmantelfläche (22; 32) eine schraubenförmig gewundene Profilierung (50; 60) aufweisen und die schraubenförmig gewundenen Profilierungen (50; 60) der zwei Wälzschnecken (20; 30) jeweilige Abschnitte einer gemeinsamen, schraubenförmig gewundenen Profilierung des Wälzschleifwerkzeugs (100) bilden,
**dadurch gekennzeichnet, dass**
die Wälzschnecken (20; 30) jeweils im Wesentlichen aus einer Matrix bestehen, in die jeweils zumindest ein Schleifmittel (52; 62) eingebettet ist, dass
die Hülse (40) im Wesentlichen aus einer Polymer-Matrix besteht, und dass die Matrix zumindest einer der Wälzschnecken (20; 30) eine Porosität aufweist und die Polymer-Matrix der Hülse (40) in offene Poren der Matrix der betreffenden Wälzschnecke (20; 30) eingedrungen ist.

2. Wälzschleifwerkzeug (100) nach Anspruch 1, wobei die Hülse (40) unmittelbar an die jeweilige Mantelfläche (24; 34) der Öffnungen (70; 72) der Wälzschnecken (20; 30) anschließt.

3. Wälzschleifwerkzeug (100) nach einem der vorhergehenden Ansprüche, wobei die jeweilige Matrix wenigstens einer der Wälzschnecken (20; 30) eine Keramik-Matrix oder eine Polymer-Matrix ist.

4. Wälzschleifwerkzeug (100) nach einem der vorhergehenden Ansprüche, wobei sich eine im Wesentlichen aus der jeweiligen Matrix und dem jeweiligen in die Matrix eingebetteten zumindest einen Schleifmittel (52; 62) bestehende Zusammensetzung einer der zwei Wälzschnecken (20; 30) von einer im Wesentlichen aus der jeweiligen Matrix und dem jeweiligen in die Matrix eingebetteten zumindest einen Schleifmittel (52; 62) bestehenden Zusammensetzung der anderen der zwei Wälzschnecken (20; 30) unterscheidet.

5. Wälzschleifwerkzeug (100) nach einem der vorhergehenden Ansprüche, wobei eine der zwei Wälzschnecken (20; 30) eine Elastizität aufweist, die sich von einer Elastizität der anderen der zwei Wälzschnecken (20; 30) unterscheidet.

6. Wälzschleifwerkzeug (100) nach einem der vorhergehenden Ansprüche, wobei die Außenmantelfläche (22; 32) einer der zwei Wälzschnecken (20; 30) Materialabtragseigenschaften aufweist, die sich von Materialabtragseigenschaften der Außenmantelfläche (22; 32) der anderen der zwei Wälzschnecken (20; 30) unterscheiden.

7. Wälzschleifwerkzeug (100) nach einem der vorhergehenden Ansprüche, wobei die Außenmantelfläche (22) einer der zwei Wälzschnecken (20; 30) einen Schruppbereich (20a) des Wälzschleifwerkzeugs (100) bildet und die Außenmantelfläche (32) der anderen der zwei Wälzschnecken (20; 30) einen Feinschliffbereich oder Polierbereich (30a) des Wälzschleifwerkzeugs (100) bildet.

8. Wälzschleifwerkzeug (100) nach einem der vorhergehenden Ansprüche, wobei das zumindest eine Schleifmittel (52; 62) wenigstens einer der Wälzschnecken (20; 30) ein Schleifmittel (52; 62) in Form von Korund, Zirkonkorund, Siliziumkarbid, kubischen Bornitrid oder Diamant oder einer Kombination von wenigstens zwei der genannten umfasst.

9. Wälzschleifwerkzeug (100) nach einem der vorstehenden Ansprüche, wobei die Anordnung der Wälzschnecken (20; 30) eine bei Rotation des Wälzschleifwerkzeugs (100) durch unterschiedliche radiale Dehnung der Wälzschnecken (20; 30) bedingte radiale Relativbewegung zwischen einander zugewandten Planflächen (28; 38) der Wälzschnecken (20; 30) gestattet.

10. Wälzschleifwerkzeug (100) nach einem der vorhergehenden Ansprüche, wobei die Hülse (40) eine Nut (46) umfasst, die von den Endseiten der Hülse (40) beabstandet an einer Innenmantelfläche (44) der Hülse (40) ausgebildet ist.

11. Verfahren zur Herstellung eines Wälzschleifwerkzeugs (100) nach einem der Ansprüche 1 bis 10, das Verfahren umfassend:
Anordnen zweier Wälzschnecken (20; 30) mit einander zugewandten Planflächen (28; 38) der Wälzschnecken (20; 30) und mit übereinstimmenden Drehachsen der Wälzschnecken (20; 30), wobei die Wälzschnecken (20; 30) jeweils Wälzschnecken (20; 30) zum Wälzschleifen einer Verzahnungskontur einer Verzahnungskomponente sind und jeweils an ihrer Außenmantelfläche (22; 32) eine schraubenförmig gewundene Profilierung (50; 60) aufweisen, wobei die schraubenförmig gewundenen Profilierungen (50; 60) der zwei Wälzschnecken (20; 30) jeweilige Abschnitte einer gemeinsamen, schraubenförmig gewundenen Profilierung bilden, wobei die Wälzschnecken (20; 30) jeweils im Wesentlichen aus einer Matrix bestehen, in die jeweils zumindest ein Schleifmittel (52; 62) eingebettet ist, wobei die Wälzschnecken (20; 30) jeweils eine axiale Öffnung (70; 72) aufweisen; und
Gießen einer Hülse (40) in den axialen Öffnungen der Wälzschnecken (20; 30) und Aushärtenlassen der Hülse (40), wobei die Hülse (40) im Wesentlichen aus einer Polymer-Matrix besteht, die stoffschlüssig mit einer jeweiligen Mantelfläche (24; 34) der Öffnungen (70; 72) der Wälzschnecken (20; 30) verbunden ist.

12. Verfahren nach Anspruch 11, wobei in dem Schritt des Anordnens die Wälzschnecken (20; 30) unmittelbar aneinandergrenzend und/oder mit einem Spalt zwischen ihren einander zugewandten Planflächen (28; 38) angeordnet werden.

## Claims

1. Generation gear grinding tool (100) for hard finishing of gearing components by continuous generation gear grinding, comprising:
two grinding worms (20; 30) for generation gear grinding of a toothed contour of a gearing component, wherein the grinding worms each have an axial opening (70; 72); and
a sleeve (40) on which the grinding worms (20; 30) are arranged one behind the other in the axial direction (A) of the sleeve (40), wherein the sleeve is integrally connected to a respective circumferential surface (24; 34) of the openings (70; 72) of the grinding worms (20; 30),
wherein the grinding worms (20; 30) each have a helically wound profile (50; 60) on their outer circumferential surface (22; 32), and the helically wound profiles (50; 60) of the two grinding worms (20; 30) form respective sections of a common, helically wound profile of the generation gear grinding tool (100),
**characterized in that**
the grinding worms (20; 30) each substantially consist of a matrix, into each of which at least one grinding agent (52; 62) is embedded,
that the sleeve (40) substantially consists of a polymer matrix, and
that the matrix of at least one of the grinding worms (20; 30) has a porosity and the polymer matrix of the sleeve (40) has penetrated into open pores of the matrix of the respective grinding worm (20; 30).

2. The generation gear grinding tool (100) according to claim 1, wherein the sleeve (40) directly adjoins the respective circumferential surface (24; 34) of the openings (70; 72) of the grinding worms (20; 30).

3. The generation gear grinding tool (100) according to any one of the preceding claims, wherein the respective matrix of at least one of the grinding worms (20; 30) is a ceramic matrix or a polymer matrix.

4. The generation gear grinding tool (100) according to any one of the preceding claims, wherein a composition, substantially consisting of the respective matrix and the respective at least one grinding agent (52; 62) embedded in the matrix, of one of the two grinding worms (20; 30) differs from a composition, substantially consisting of the respective matrix and the respective at least one grinding agent (52; 62) embedded in the matrix, of the other of the two grinding worms (20; 30).

5. The generation gear grinding tool (100) according to any one of the preceding claims, wherein one of the two grinding worms (20; 30) has an elasticity that differs from an elasticity of the other of the two grinding worms (20; 30).

6. The generation gear grinding tool (100) according to any one of the preceding claims, wherein the outer circumferential surface (22; 32) of one of the two grinding worms (20; 30) has material removal properties that differ from material removal properties of the outer circumferential surface (22; 32) of the other of the two grinding worms (20; 30).

7. The generation gear grinding tool (100) according to any one of the preceding claims, wherein the outer circumferential surface (22) of one of the two grinding worms (20; 30) forms a roughing region (20a) of the generation gear grinding tool (100) and the outer circumferential surface (32) of the other of the two grinding worms (20; 30) forms a fine grinding region or polishing region (30a) of the generation gear grinding tool (100).

8. The generation gear grinding tool (100) according to any one of the preceding claims, wherein the at least one grinding agent (52; 62) of at least one of the grinding worms (20; 30) comprises a grinding agent (52; 62) in the form of corundum, zirconia corundum, silicon carbide, cubic boron nitride or diamond or a combination of at least two of the above.

9. The generation gear grinding tool (100) according to any one of the preceding claims, wherein the arrangement of the grinding worms (20; 30) allows for a radial relative movement between mutually facing end surfaces (28; 38) of the grinding worms (20; 30) caused by different radial expansion of the grinding worms (20; 30) when the generation gear grinding tool (100) is rotated.

10. The generation gear grinding tool (100) according to any one of the preceding claims, wherein the sleeve (40) comprises a groove (46), formed on an inner circumferential surface (44) of the sleeve (40) at a distance from the end faces of the sleeve (40).

11. Method for manufacturing a generation gear grinding tool (100) according to any one of claims 1 to 10, the method comprising:
arranging two grinding worms (20; 30) with mutually facing end surfaces (28; 38) of the grinding worms (20; 30) and with matching axes of rotation of the grinding worms (20; 30), wherein the grinding worms (20; 30) are each grinding worms (20; 30) for generation gear grinding of a toothed contour of a gearing component and each have a helically wound profile (50; 60) on their outer circumferential surface (22; 32), wherein the helically wound profiles (50; 60) of the two grinding worms (20; 30) form respective sections of a common, helically wound profile, wherein the grinding worms (20; 30) each substantially consist of a matrix into each of which at least one grinding agent (52; 62) is embedded, wherein the grinding worms (20; 30) each have an axial opening (70; 72); and
casting a sleeve (40) in the axial openings of the grinding worms (20; 30) and allowing the sleeve (40) to harden, wherein the sleeve (40) substantially consists of a polymer matrix which is integrally connected to a respective circumferential surface (24; 34) of the openings (70; 72) of the grinding worms (20; 30).

12. The method according to claim 11, wherein, in the step of arranging, the grinding worms (20; 30) are arranged directly adjacent to one another and/or with a gap between their mutually facing end surfaces (28; 38).

## Revendications

1. Outil de rectification en développante (100) pour l'usinage de finition dure de composants de denture par rectification continue en développante, comprenant :
deux vis sans fin cylindriques (20 ; 30) pour rectifier en développante un contour de denture d'un composant de denture, dans lequel les vis sans fin cylindriques comportent respectivement une ouverture axiale (70 ; 72) ; et
une douille (40) sur laquelle les vis sans fin cylindriques (20 ; 30) sont disposées l'une derrière l'autre dans une direction axiale (A) de la douille (40), dans lequel la douille est assemblée par liaison de matière à une surface circonférentielle (24; 34) respective des ouvertures (70 ; 72) des vis sans fin cylindriques (20 ; 30),
dans lequel les vis sans fin cylindriques (20 ; 30) présentent respectivement, au niveau de leur surface circonférentielle extérieure (22 ; 32), un profilage enroulé en hélice (50 ; 60) et les profilages enroulés en hélice (50 ; 60) des deux vis sans fin cylindriques (20 ; 30) forment des sections respectives d'un profilage commun enroulé en hélice de l'outil de rectification en développante (100),
**caractérisé en ce que**
les vis sans fin cylindriques (20 ; 30) sont respectivement essentiellement constituées d'une matrice dans laquelle au moins un abrasif (52 ; 62) est incorporé,
la douille (40) est essentiellement constituée d'une matrice polymère, et
la matrice d'au moins une des vis sans fin cylindriques (20 ; 30) présente une porosité et la matrice polymère de la douille (40) a pénétré dans des pores ouverts de la matrice de la vis sans fin cylindrique (20 ; 30) concernée.

2. Outil de rectification en développante (100) selon la revendication 1, dans lequel la douille (40) s'assemble directement à la surface circonférentielle (24 ; 34) respective des ouvertures (70 ; 72) des vis sans fin cylindriques (20 ; 30).

3. Outil de rectification en développante (100) selon l'une des revendications précédentes, dans lequel la matrice respective d'au moins une des vis sans fin cylindriques (20 ; 30) est une matrice céramique ou une matrice polymère.

4. Outil de rectification en développante (100) selon l'une des revendications précédentes, dans lequel une composition d'une des deux vis sans fin cylindriques (20 ; 30) essentiellement constituée de la matrice respective et d'au moins un abrasif (52 ; 62) respectif incorporé dans la matrice est différente d'une composition de l'autre des deux vis sans fin cylindriques (20 ; 30) essentiellement constituée de la matrice respective et du au moins un abrasif (52 ; 62) incorporé dans la matrice.

5. Outil de rectification en développante (100) selon l'une des revendications précédentes, dans lequel l'une des deux vis sans fin cylindriques (20 ; 30) présente une élasticité qui est différente d'une élasticité de l'autre des deux vis sans fin cylindriques (20 ; 30).

6. Outil de rectification en développante (100) selon l'une des revendications précédentes, dans lequel la surface circonférentielle extérieure (22 ; 32) de l'une des deux vis sans fin cylindriques (20 ; 30) présente des propriétés d'enlèvement de matière qui sont différentes des propriétés d'enlèvement de matière de la surface circonférentielle extérieure (22 ; 32) de l'autre des deux vis sans fin cylindriques (20 ; 30).

7. Outil de rectification en développante (100) selon l'une des revendications précédentes, dans lequel la surface circonférentielle extérieure (22) de l'une des deux vis sans fin cylindriques (20 ; 30) forme une zone de dégrossissage (20a) de l'outil de rectification en développante (100) et la surface circonférentielle extérieure (32) de l'autre des deux vis sans fin cylindriques (20 ; 30) forme une zone de finition ou de polissage (30a) de l'outil de rectification en développante (100).

8. Outil de rectification en développante (100) selon l'une des revendications précédentes, dans lequel le au moins un abrasif (52 ; 62) d'au moins une des vis sans fin cylindriques (20 ; 30) comprend un abrasif (52 ; 62) sous forme de corindon, de corindon de zirconium, de carbure de silicium, de nitrure de bore cubique ou de diamant, ou d'une combinaison d'au moins deux des éléments précités.

9. Outil de rectification en développante (100) selon l'une des revendications précédentes, dans lequel la disposition des vis sans fin cylindriques (20 ; 30) permet un mouvement radial relatif par une rotation de l'outil de rectification en développante (100) causé par une dilatation radiale différente des vis sans fin cylindriques (20 ; 30) entre des surfaces planes (28 ; 38) opposées des vis sans fin cylindriques (20 ; 30).

10. Outil de rectification en développante (100) selon l'une des revendications précédentes, dans lequel la douille (40) comprend une gorge (46) qui est formée à distance des côtés d'extrémité de la douille (40), sur une surface circonférentielle intérieure (44) de la douille (40).

11. Procédé de fabrication d'un outil de rectification en développante (100) selon l'une des revendications 1 à 10, le procédé comprenant les étapes consistant à :
disposer deux vis sans fin cylindriques (20 ; 30) avec des surfaces planes (28 ; 38) opposées des vis sans fin cylindriques (20 ; 30) et avec des axes de rotation correspondants des vis sans fin cylindriques (20 ; 30), dans lequel les vis sans fin cylindriques (20 ; 30) sont respectivement des vis sans fin cylindriques (20 ; 30) destinées à rectifier en développante un contour de denture d'un composant de denture et comportent respectivement, au niveau de leur surface circonférentielle extérieure (22 ; 32), un profilage enroulé en hélice (50 ; 60), dans lequel les profilages enroulés en hélice (50 ; 60) des deux vis sans fin cylindriques (20 ; 30) forment des sections respectives d'un profilage commun enroulé en hélice, dans lequel les vis sans fin cylindriques (20 ; 30) sont essentiellement constituées d'une matrice dans laquelle au moins un abrasif (52 ; 62) est respectivement incorporé, dans lequel les vis sans fin cylindriques (20 ; 30) comportent respectivement une ouverture axiale (70 ; 72) ; et
couler une douille (40) dans les ouvertures axiales des vis sans fin cylindriques (20 ; 30) et laisser durcir la douille (40), dans lequel la douille (40) est essentiellement constituée d'une matrice polymère qui est assemblée par liaison de matière à une surface circonférentielle (24 ; 34) respective des ouvertures (70 ; 72) des vis sans fin cylindriques (20 ; 30).

12. Procédé selon la revendication 11, dans lequel, à l'étape de disposition, les vis sans fin cylindriques (20 ; 30) sont agencées directement adjacentes les unes aux autres et/ou avec un espace entre leurs surfaces planes (28 ; 38) opposées.
